# EUROPÄISCHE PATENTSCHRIFT

(11) **EP 3 713 861 B1**
(45) Veröffentlichungstag und Bekanntmachung des Hinweises auf die Patenterteilung: **02.08.2023**
(21) Anmeldenummer: 18792385.9
(22) Anmeldetag: 17.10.2018
(51) Int. Cl.: B65G 47/08, B65G 47/32, B65G 47/86, B65G 47/90, B65G 54/02

(54) **VORRICHTUNG UND VERFAHREN ZUM GRUPPENWEISEN ZUFÜHREN VON BEHÄLTER AN EINE GETAKTETE BEHANDLUNGSMASCHINE**
DEVICE AND METHOD FOR GROUPED FEEDING OF CONTAINERS TO A CYCLICAL PROCESSING MACHINE
DISPOSITIF ET PROCÉDÉ DESTINÉS À INTRODUIRE PAR GROUPE DES RÉCIPIENTS DANS UNE MACHINE DE MANIPULATION CADENCÉE

(30) Priorität: 20.11.2017 DE 102017127322
(43) Veröffentlichungstag der Anmeldung: 30.09.2020
(73) Patentinhaber: KHS GmbH, 44143 Dortmund (DE)
(72) Erfinder: NIEHR, Thomas, 55583 Bad Münster am Stein Ebernburg (DE); SINGUR, Igor, 55545 Bad Kreuznach (DE); VORWERK, Jürgen Franz, 41238 Mönchengladbach (DE)
(86) Internationale Anmeldenummer: PCT/EP2018/078405
(87) Internationale Veröffentlichungsnummer: WO 2019/096527

(56) Entgegenhaltungen:
- EP-A1- 1 958 898
- WO-A1-02/49829
- WO-A1-2016/177964
- WO-A2-2015/036196
- WO-A2-2017/179022
- DE-A1-102004 036 063
- DE-A1-102011 075 171
- FR-A1- 3 035 651
- JP-A- 2012 031 454

## Beschreibung

Die Erfindung bezieht sich auf eine Vorrichtung und ein zugehöriges Verfahren zum gruppenweisen Zuführen von Behälter an eine getaktete Behandlungsmaschine.

Der prinzipielle Aufbau und die Funktionsweise von Behälterbehandlungsmaschinen oder -anlagen, insbesondere Füllsystemen oder Füllanlagen in der Getränkeindustrie sind hinlänglich bekannt.

Insbesondere sind Füllsysteme oder Füllanlagen bekannt, denen gruppenweise von einer Einlaufvorrichtung ein einreihiger Behälterstrom quer zur Transportrichtung zugeführt wird, und zwar in Form einer getakteten Querbewegung. Die den einreihigen Behälterstrom bildenden Behälter, insbesondere Flaschen werden von einer Linearmaschine aufgenommen und in der Füllanlage gleichzeitig gruppenweise behandelt, insbesondere befüllt.

Die Zuführung der Behälter an derartige Füllanlagen bzw. die mit dieser zusammenwirkenden Einlaufvorrichtung erfolgt im so genannten "Lufttransport" bzw. durch einen "Lufttransporteur", d.h. die Behälter werden in Form einer Behälterreihe entlang einer Transportbahn in hängender Weise transportiert und an Aufnahmeeinrichtung der vorzugsweise ein Oval bildenden Einlaufvorrichtung übergeben. Die Aufnahmeeinrichtungen sind vorzugsweise durch so genannte Greifer unterschiedlichster Ausführungsform gebildet, welche an der Einlaufvorrichtung montiert sind und in einer Transportrichtung umlaufend bewegt werden.

Die Aufnahmeeinrichtungen bzw. Greifern sind zum Aufnehmen und Halten der zu transportierenden Behälter im Bereich des Behälterhalses eingerichtet. Insbesondere bei in Form von PET-Flaschen ausgebildeten Behältern erfolgt die hängende Halterung im Bereich des Neckringes.

Beim Zuführen der Behälter an die Einlaufvorrichtung im "Lufttransport" ist auch eine Unterbrechung der Einlaufeinrichtung bzw. ein getakteter Betrieb dessen möglich, um die Behälter gruppenweise in Form einer getakteten Querbewegung vom einen linearen Transportabschnitt des Einlaufvorrichtung aufzunehmen und an eine Linearmaschine, vorzugsweise eine Tragplatte mit mehreren Aufnahmeplätzen zu übergeben.

Bei einer kontinuierlichen Zuführung der Behälter an die Einlaufvorrichtung über eine beispielsweise rotativ arbeitende Zuleitvorrichtung, beispielsweise über eine Zuleitsterneinrichtung, ist jedoch eine Unterbrechung der Einlaufvorrichtung sehr nachteilig.

Aus der Druckschrift WO 02/49829 A1 ist eine Vorrichtung zur Herstellung von Behältern durch Blasformung mit einer Heizstation, einem Übergaberad und einem Blasrad mit mehreren Blasformen bekannt geworden, wobei Vorformlinge von der Heizstation über das Übergaberad dem Blasrad zugeführt werden und die einzelnen Blasformen mindestens zwei Vorformlinge zur Umformung aufnehmen können. Das Übergaberad umfasst mehrere sich radial nach außen erstreckende Greifarme mit jeweils mindestens zwei schwenkbaren Greifern. Dabei entspricht der Abstand der Greifer eines Greifarmes zueinander dem Abstand der Längsachse der Vorformlinge in der Blasform und ist doppelt so groß wie der Abstand der Vorformlinge in der Heizstation.

Die Druckschrift WO 02/49829 A1 offenbart eine Vorrichtung zum gruppenweise Aufnehmen und Zuführen einer Behältergruppe an eine getaktete Behandlungsmaschine mit zumindest einer getakteten Aufnahmevorrichtung zur Aufnahme der Behältergruppe umfassend eine Einlaufvorrichtung und eine Zuleitvorrichtung, bei der die Einlaufvorrichtung eine geschlossene Transportstrecke mit zumindest einem linearen Transportstreckenabschnitt bildet, wobei die Einlaufvorrichtung ein Transportelement zum Transport der Behälter entlang der Transportstrecke umfassend eine Vielzahl von Trag- und Halteelementen aufweist, über die die Behälter in Form eines kontinuierlichen Behälterstromes entlang der Transportstrecke transportierbar sind, bei der die Zuleitvorrichtung zum hängenden Transport der Behälter ausgebildet ist und nicht als Lufttransporteur ausgebildet ist, mittels der die hängend transportierten Behälter einzeln an den Trag- und Halteelementen der Einlaufvorrichtung übergebbar sind, wobei in einem Übergangsbereich zwischen der Einlaufvorrichtung und der Aufnahmevorrichtung eine Transfereinrichtung umfassend eine Vielzahl von Greifern zum gleichzeitigen Aufnehmen der Behälter einer Behältergruppe aus dem kontinuierlichen Behälterstrom im Bereich eines Transportstreckenabschnittes der Einlaufvorrichtung und zum Zuführen der aufgenommenen Behältergruppe an die getaktete Aufnahmevorrichtung vorgesehen ist, wobei die Greifer der Transfereinrichtung zur Aufnahme der entlang des Transportstreckenabschnittes bewegten Behälter der Behältergruppe um eine vertikale Drehachse rotier- oder schwenkbar ausgebildet sind.

Die Druckschrift WO 02/49829 A1 offenbart zudem ein Verfahren zum gruppenweisen Aufnehmen und Zuführen einer Behältergruppe an eine getaktete Behandlungsmaschine mit zumindest einer getakteten Aufnahmevorrichtung zur Aufnahme der Behältergruppe umfassend eine Einlaufvorrichtung und eine Zuleitvorrichtung, bei dem ein kontinuierlicher Behälterstrom über die Zuleitvorrichtung der Einlaufvorrichtung zugeführt wird, die eine endlos umlaufende Transportstrecke mit zumindest einem linearen Transportstreckenabschnitt ausbildet, wobei die Behälter entlang der Transportstrecke mittels einer Vielzahl von Trag- und Halteelementen hängend transportiert werden, bei dem mittels eine eine Vielzahl von rotier- oder schwenkbare Greifer aufweisende Transfereinrichtung die Behälter in Form einer Behältergruppe gleichzeitig aus dem kontinuierlich bewegten Behälterstrom in einem Übergangsbereich zwischen der Einlaufvorrichtung und der Aufnahmevorrichtung gruppenweise aufgenommen und die aufgenommenen Behälter der getakteten Aufnahmevorrichtung gruppenweise zugeführt werden, wobei zur gruppenweisen Aufnahme der Behälter die Rotations- oder Schwenkbewegung der Greifer der Transfereinrichtung an die Transportbewegung der Behälter angepasst ist.

Der vorliegenden Erfindung liegt die Aufgabe zu Grunde, eine Vorrichtung und ein zugehöriges Verfahren zum gruppenweisen Zuführen von Behältern an eine getaktete Behandlungsmaschine anzugeben, mittels der die einzeln und hängend über eine Zulaufeinrichtung entlang einer Transportstrecke transportierten Behältern gruppenweise an die getaktete Behandlungsmaschine zuführbar sind. Diese Aufgabe wird mittels einer Vorrichtung zum gruppenweisen Aufnehmen und Zuführen einer Behältergruppe nach Anspruch 1 und mittels eines Verfahrens zum gruppenweisen Aufnehmen und Zuführen einer Behältergruppe nach Anspruch 13 gelöst. Die Unteransprüche betreffen besonders bevorzugte Ausführungsvarianten der Erfindung.

Ein wesentlicher Aspekt der erfindungsgemäßen Vorrichtung ist darin zu sehen, dass die Greifer der Transfereinrichtung zur Aufnahme der entlang des linearen

Transportstreckenabschnittes bewegten Behälter der Behältergruppe um eine vertikale Drehachse rotier- oder schwenkbar ausgebildet sind. Durch die rotierende oder schwenkbare Ausgestaltung der Greifer der Transfereinrichtung kann die Aufnahme bzw. Übergabe der Behälter an die fortlaufende d.h. nicht unterbrochene Transportbewegung der Behälter angepasst werden, d.h. die Greiferöffnung der Greifer wird in den bewegten kontinuierlichen Behälterstrom störungsfrei derart eingeschwenkt, dass ein gleichzeitiges Aufnehmen einer Behältergruppe aus dem bewegten Behälterstrom problemlos möglich ist.

Dabei ist vorliegend unter einem kontinuierlichen Behälterstrom im Bereich Einlaufeinrichtung ein Behälterstrom zu verstehen, der zwar permanent und unterbrechungsfrei mit in der Regel weitestgehend gleichbleibender Geschwindigkeit der Einlaufeinrichtung über eine Zuleitvorrichtung zugeführt wird, aber in oder an der Einlaufeinrichtung eine Aufteilung in Teilgruppen erfahren kann. Dabei können diese Teilgruppen in oder an der Einlaufeinrichtung mit unterschiedlichen Geschwindigkeiten verfahren werden.

Vorteilhaft sind die Greifer der Transfereinrichtung zum Greifen der Behälter am oder oberhalb eines Behälterhalses oder bei durch PET- Flaschen gebildete Behälter am oder oberhalb eines Neckringes einer PET-Flasche ausgebildet. Hierdurch können die Greifer der Transfereinrichtung vereinfacht ausgebildet sein, beispielsweise durch eine verschließbare Ausnehmung eines Halteplattenelementes gebildet sein, wobei die Greifer der Transfereinrichtung zumindest zwei Greifarme aufweist, mittels denen auch eine kraftschlüssige Halterung der Behälter im Bereich des Behälterhalses oder des Neckringes realisierbar ist.

Vorzugsweise sind die Greifer der Transfereinrichtung synchron zueinander rotier- oder schwenkbar, wobei hierzu beispielsweise eine gemeinsame Antriebseinrichtung vorgesehen ist, über welche die Greifer der Transfereinrichtung zur Erzeugung einer synchronen Dreh- oder Schwenkbewegung der Greifer um die jeweilige Drehachse antriebsmäßig verbunden sind. Die Greifer der Transfereinrichtung weisen beispielsweise zwei, einander gegenüberliegende Greiferarme auf, deren freien Endbereiche eine Greiferöffnung zum Einführen und Halten des Behälterhalses zwischen den beiden Greiferarme einschließen. Die Greifer der Transfereinrichtung weisen ferner eine Greiferöffnungsachse auf, die sich von der Drehachse senkrecht und radial nach außen zwischen den beiden Greiferarmen über die Greiferöffnung erstreckt.

Erfindungsgemäß ist die Rotation oder das Schwenken der Greifer der Transfereinrichtung an die lineare Transportbewegung der Behälter im linearen Transportstreckenabschnittes angepasst, und zwar derart, dass ein störungsfreies Einschwenken der Greiferöffnung zur Aufnahme des Behälterhalses bzw. Neckringes gewährleistet ist.

In einer besonders bevorzugten Ausführungsvariante sind die Greifer der Transfereinrichtung parallel und beabstandet zum linearen Transportstreckenabschnitt angeordnet, wobei jeweils ein Greifer der Transfereinrichtung zur Aufnahme eines Behälters von einem Greifer der Einlaufvorrichtung vorgesehen ist.

Weiter bevorzugt sind die Trag- und Halteelemente der Einlaufvorrichtung von einem endlos umlaufenden Transportelement gehalten und stehen seitlich von der Transportstrecke nach außen ab. Besonders vorteilhaft kann das Transportelement durch eine Transportkette oder eine Transportschiene mit zugehörigen Schlittenelementen oder Zugmodul gebildet sein, wobei die Greifer an den Kettengliedern bzw. den Schlittenelementen befestigt sind.

Ferner können mehrere voneinander unabhängig steuer- und antreibbare Zugmodule vorgesehen sein. Ein Zugmodul weist hierbei idealerweise die Anzahl an Trag- und Halteelementen auf, die der Behälterzahl oder -gruppe entspricht, welche im bestimmungsgemäßen Betrieb taktweise in die Behandlungsmaschine überführt werden muss.

Ebenfalls ist Gegenstand der Erfindung ein Verfahren nach Anspruch 13 zum gruppenweisen Aufnehmen und Zuführen einer Behältergruppe an eine getaktete Behandlungsmaschine, insbesondere Füllmaschine, umfassend eine Einlaufvorrichtung, eine Zuleitvorrichtung und zumindest eine getaktete Aufnahmevorrichtung zur Aufnahme der Behältergruppe, bei dem ein kontinuierlicher Behälterstrom über die Zuleitvorrichtung der Einlaufvorrichtung zugeführt wird, die eine endlos umlaufende Transportstrecke mit zumindest einem linearen Transportstreckenabschnitt ausbildet, wobei die Behälter entlang der Transportstrecke mittels einer Vielzahl von Trag- und Halteelementen hängend transportiert werden. Erfindungsgemäß werden mittels einer eine Vielzahl von rotier- oder schwenkbaren Greifern aufweisenden Transfereinrichtung die Behälter in Form einer Behältergruppe gleichzeitig aus dem kontinuierlich bewegten Behälterstrom im Bereich des zumindest einen linearen Transportstreckenabschnittes der Einlaufrichtung in einem Übergangsbereich zwischen der Einlaufvorrichtung und der Aufnahmevorrichtung gruppenweise aufgenommen und die aufgenommenen Behälter der getakteten Aufnahmevorrichtung gruppenweise zugeführt, wobei zur gruppenweisen Aufnahme der Behälter die Rotations- oder Schwenkbewegung der Greifer der Transfereinrichtung an die Transportbewegung der Behälter entlang des linearen Transportstreckenabschnittes angepasst ist. Besonders vorteilhaft werden die Greifer synchron hierbei zueinander rotiert oder geschwenkt.

Weiterhin vorteilhaft werden die Trag- und Halteelemente beim Transfer von der Einlaufvorrichtung zur getakteten Aufnahmevorrichtung fortlaufend entlang der Transportstrecke bewegt, d.h. die Transportbewegung an sich wird nicht unterbrochen oder gestoppt, vielmehr wird die Einlaufvorrichtung kontinuierlich weiterbetrieben.

Der Ausdruck "im Wesentlichen" bzw. "etwa" bedeutet im Sinne der Erfindung Abweichungen vom jeweils exakten Wert um +/- 10%, bevorzugt um +/- 5% und/oder Abweichungen in Form von für die Funktion unbedeutenden Änderungen.

Weiterbildungen, Vorteile und Anwendungsmöglichkeiten der Erfindung ergeben sich auch aus der nachfolgenden Beschreibung von Ausführungsbeispielen und aus den Figuren.

Die Erfindung wird im Folgenden anhand der Figuren an Ausführungsbeispielen näher erläutert. Es zeigen:
- Fig. 1: beispielhaft eine schematische Draufsicht auf eine erfindungsgemäße Vorrichtung zum Aufnehmen und Zuführen einer Behältergruppe an eine getaktete Behandlungsmaschine,
- Fig. 2: beispielhaft eine schematische Seitenansicht der erfindungsgemäßen Vorrichtung gemäß der Figur 1,
- Fig. 3: beispielhaft eine schematische Seitenansicht der erfindungsgemäßen Transfereinrichtung nebst einem Teil der getakteten Aufnahmeeinrichtung,
- Fig. 4: beispielhaft eine perspektivische Ansicht der erfindungsgemäßen Transfereinrichtung gemäß Figur 3,
- Fig. 5: beispielhaft eine schematische Seitansicht eines einen Behälter hängend transportierenden Greifers der Einlaufvorrichtung sowie einem gegenüberliegenden, rotierend ausgebildeten Greifer der erfindungsgemäßen Transfereinrichtung
- Fig. 6: beispielhaft eine weitere perspektivische Ansicht einer Ausführungsvariante einer erfindungsgemäßen Transfereinrichtung nebst einem Teil der getakteten Aufnahmeeinrichtung,
- Fig. 7a-f: mehrere schematische Draufsichten auf die im linearen Transportabschnitt befindlichen Greifer der Einlaufvorrichtung und die Greifer der erfindungsgemäßen Transfereinrichtung zur Aufnahme und Übergabe der Behältergruppe in aufeinander folgenden, unterschiedlichen Zeitpunkten,
- Fig. 8: beispielhaft eine schematische Draufsicht auf eine Vorrichtung analog der Figur 1, wobei frei steuerbare Zugmodule vorgesehen sind, die auf einer Transportschiene laufen und
- Fig. 9: beispielhaft eine schematische Draufsicht einer Vorrichtung analog Fig. 8, wobei die Zugmodule mit endlos umlaufenden Riemen gekoppelt sind.

Für gleiche oder gleich wirkende Elemente der Erfindung werden in den Figuren identische Bezugszeichen verwendet. Ferner werden der Übersichtlichkeit halber nur Bezugszeichen in den einzelnen Figuren dargestellt, die für die Beschreibung der jeweiligen Figur erforderlich sind.

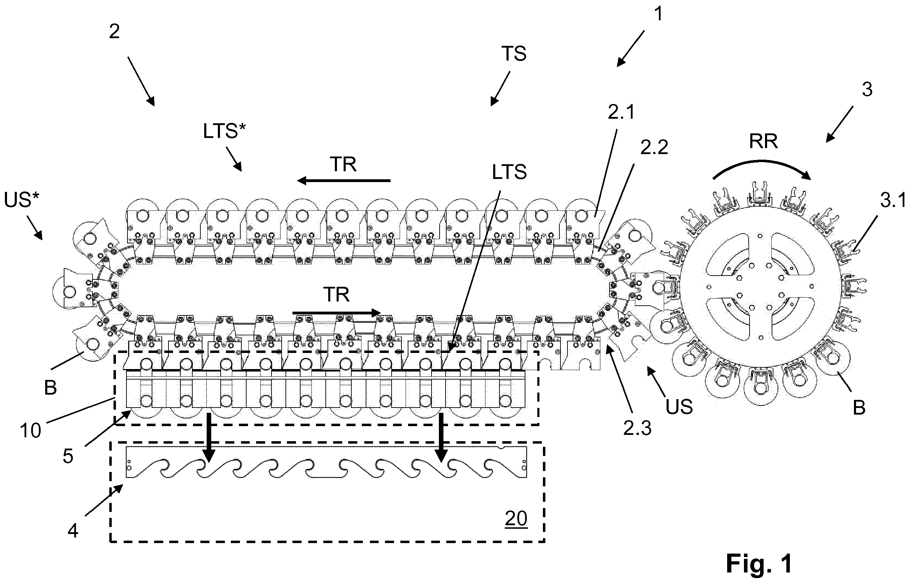

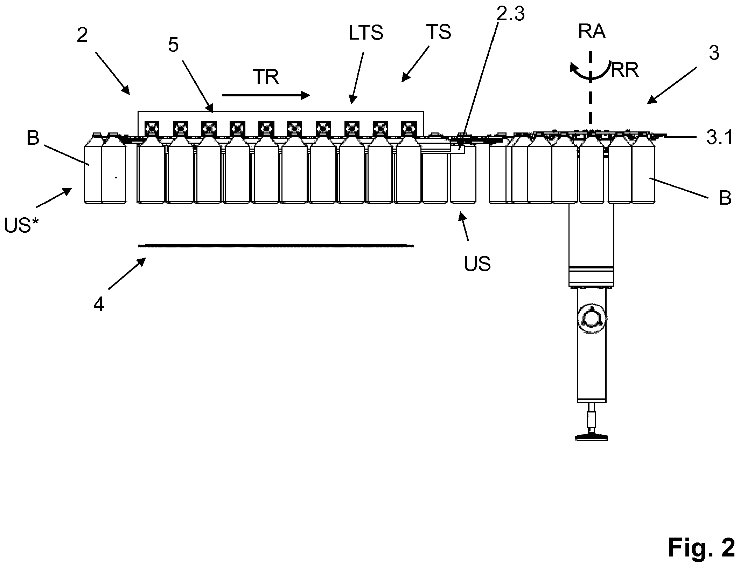

Die in den Figuren 1 und 2 allgemein mit 1 bezeichnete erfindungsgemäße Vorrichtung dient zum Aufnehmen und Zuführen einer Behältergruppe BG an eine getaktete Behandlungsmaschine 20, welche jedoch in den Figuren nicht explizit dargestellt, sondern lediglich mittels eines gestrichelt gezeichneten Blockes dargestellt ist. Hierbei kann die erfindungsgemäße Vorrichtung der getakteten Behandlungsmaschine 20 vorgeschaltet oder ein Teil dieser Maschine sein.

Vorzugsweise ist die getaktete Behandlungsmaschine 20 bzw. Behälterbehandlungsmaschine als getaktete Füllmaschine oder Füllanlage ausgebildet, mittels der ein gruppenweises Befüllen von Behältern B erfolgt. Insbesondere so genannten Linearfüllern werden die Behälter B in Form von Behältergruppen zum Füllen zugeführt, wobei eine Behältergruppe BG eine Vielzahl von in einer linearen Reihe beabstandet zueinander angeordnete Behälter B aufweist. Die Behälterlängsachsen BA der Behälter B einer Behältergruppe BG verlaufen vorzugsweise parallel zueinander und weisen jeweils denselben Abstand auf.

Im vorliegenden Ausführungsbeispiel gemäß der Figuren 1 und 2 umfasst die erfindungsgemäße Vorrichtung 1 eine Einlaufvorrichtung 2, eine rotative Zuleitvorrichtung 3 und zumindest eine lineare, getaktete Aufnahmevorrichtung 4 zur Aufnahme der Behältergruppe. Zum gruppenweisen Aufnehmen einer Behältergruppe von der Einlaufvorrichtung 2 und getakteten Zuführen bzw. Übergeben an die lineare, getaktete Aufnahmevorrichtung 4 ist erfindungsgemäß eine Transfereinrichtung 5 vorgesehen, die in einem Übergangsbereich 10 zwischen der Einlaufvorrichtung 2 und der Aufnahmevorrichtung 4 angeordnet ist.

Die Einlaufvorrichtung 2 bildet eine endlos umlaufende Transportstrecke TS mit zumindest einem linearen Transportstreckenabschnitt LTS aus, welche beispielsweise in Form eines Einlaufovals realisiert ist, d.h. die Transportstrecke TS weist in Draufsicht einen geschlossenen, ovalen Verlauf auf. In der Ausführungsvariante als Einlaufoval weist die Transportstreckte TS beispielsweise zwei gegenüberliegende lineare Transportstreckenabschnitte LTS, LTS* auf, die vorzugsweise parallel zueinander verlaufen und über zwei gegenüberliegende Umlenkabschnitte US, US* miteinander verbunden sind.

Die Einlaufvorrichtung 2 ist hierbei zum hängenden Transport der Behälter B entlang der Transportstrecke TS in einer Transportrichtung TR ausgebildet und weist hierzu eine Vielzahl von Trag- und Halteelementen 2.1 auf, über die die Behälter B in Form eines kontinuierlichen Behälterstromes entlang der Transportstrecke transportiert werden und die an einem endlos umlaufenden Transportelement 2.2 gehalten sind und vorzugsweise seitlich von der Transportstrecke TS nach außen abstehen.

Das Transportelement 2.2 kann beispielsweise in Form einer Transportkette oder einer Transportschiene 2.3 mit zugehörigen Schlittenelementen realisiert sein, wobei im Falle der Transportschiene, jeweils ein Trag- und Halteelement 2.1 auf einem Schlittenelement montiert ist. In den Figuren 1 ist beispielhaft eine als Transportkette ausgebildetes Transportelement 2.2 dargestellt, welche mehrere Kettenglieder aufweist, die Transportschiene 2.3 dient als Führungselement für das kettenartige Transportelement 2.2. Die Trag- und Halteelemente 2.1 sind vorzugsweise an jeweils einem Kettenglied lösbar befestigt. In den weiteren Figuren 2 bis 7a-f sind die Trag- und Halteelemente 2.1 der Einlaufvorrichtung 2 jeweils isoliert von dem jeweiligen Transportelement 2.2 dargestellt.

Bei dem in der Figur 1 dargestellten Ausführungsform ist nur ein bewegtes und gesteuertes Transportelement 2.2 vorgesehen, so dass alle Trag- und Halteelemente 2.1 und die daran gehaltenen Behälter B immer gleichförmig positiv oder negativ beschleunigt werden, sowie mit derselben Geschwindigkeit transportiert werden

Wie beispielhaft den Figuren 2 bis 5 zu entnehmen ist, sind die Trag- und Halteelemente 2.1 in an sich bekannter Weise zum Aufnehmen und Halten der zu transportierenden Behälter B im Bereich des Behälterhalses eingerichtet. Insbesondere bei in Form von PET-Flaschen ausgebildeten Behältern B erfolgt die hängende Halterung im Bereich des Neckringes der PET-Flasche. Im vorliegenden Ausführungsbeispiel sind die Behälter B durch PET-Flaschen gebildet.

Im Betrieb läuft das Transportelement 2.2 kontinuierlich mit einer vorgegebenen, vorzugsweise konstanten Transportgeschwindigkeit um und fördert die Behälter B entlang der Transportstrecke TS, und zwar vom stirnseitigen Umlenkabschnitt US entlang des nachfolgenden linearen Transportstreckenabschnittes LTS* über den gegenüberliegenden weiteren linearen Transportstreckenabschnittes LTS und wieder zurück zum stirnseitigen Umlenkabschnitt US. Die Zuführung bzw. Übergabe der Behälter B an die Einlaufvorrichtung 2 bzw. deren Trag- und Halteelemente 2.1 erfolgt über die Zuleitvorrichtung 3, welche vorzugsweise als Zuleitsterneinrichtung ausgebildet ist, bei der die Behälter B um eine Rotationsachse RA in einer Rotationsrichtung RR in hängender Weise transportiert werden. Diese umfasst in an sich bekannter Weise eine Vielzahl von Greifern 3.1, welche die Behälter B in hängender Weise vorzugsweise im Bereich des Behälterhalses bzw. bei PET-Flaschen im Bereich des Neckringes greifen und von einem Einlaufbereich einem Auslaufbereich zuführen, wobei im Auslaufbereich die Übergabe an die Trag- und Halteelemente 2.1 der Einlaufvorrichtung 2 erfolgt, die beispielsweise ebenfalls durch Greifer gebildet sind. Hierzu sind die Transportgeschwindigkeit der Einlaufvorrichtung 2 und die Rotationsgeschwindigkeit der rotativen Zuleitvorrichtung 3 in an sich bekannter Weise entsprechend aufeinander abgestimmt, so dass eine störungsfreie Übergabe erfolgt. Die Zuführung der Behälter B von der rotativen Zuleitvorrichtung 3 an die Einlaufvorrichtung 2 erfolgt hierbei vorzugsweise kontinuierlich.

Die derart an die Einlaufvorrichtung 2 übergebenen Behälter B werden im Bereich des weiteren linearen Transportstreckenabschnittes LTS erfindungsgemäß gruppenweise aufgenommen, und zwar mittels der erfindungsgemäßen Transfereinrichtung 5. Zur gruppenweisen Aufnahme der von den Trag- und Halteelementen 2.1 entlang des linearen Transportstreckenabschnittes LTS kontinuierlich geförderten Behälter B weist die Transfereinrichtung 5 eine Vielzahl von Greifern 5.1 auf, mittels derer die die Behältergruppe BG bildenden Behälter B aus dem kontinuierlichen Behälterstrom im Bereich des zumindest einen linearen Transportstreckenabschnittes LTS gruppenweise aufgenommen werden und anschließend die aufgenommene Behältergruppe BG an die getaktete Aufnahmevorrichtung 4 übergeben wird.

Zur Aufnahme der entlang des linearen Transportstreckenabschnittes LTS in Transportrichtung TR bewegten Behälter B sind die Greifer 5.1 der Transfereinrichtung 5 um eine vertikale Drehachse DA rotier- oder schwenkbar ausgebildet, d.h. die Greifer 5.1 der Transfereinrichtung 5 werden synchron zur von der Einlaufvorrichtung 2 erzeugten vorzugsweise linearen Bewegung der Behälter B um die Drehachse DA rotiert, und zwar derart, dass im linearen Transportstreckenabschnitt LTS die Greifer 5.1 der Transfereinrichtung 5 die Behälter B im Bereich des Behälterhalses aufnehmen und aus dem linearen Transportstreckenabschnitt LTS durch die Rotationsbewegung der Greifer 5.1 ausschwenken, wodurch diese aus der bestehenden Halterung der Trag- und Halteelemente 2.1 gelöst werden. Das Aufnehmen erfolgt vorzugsweise in einem Rotationswinkelbereich von kleiner 180°.

Die Greifer 5.1 der Transfereinrichtung 5 weisen vorzugsweise zwei, einander gegenüberliegende Greiferarme auf, deren freie Endbereiche eine Greiferöffnung zur Einführen des Behälterhalses zwischen die beiden Greiferarme einschließen. Die Greifer 5.1 der Transfereinrichtung 5 weisen eine Greiferöffnungsachse GA auf, die sich von der Drehachse DA senkrecht und radial nach außen zwischen den beiden Greiferarmen erstreckt über die Greiferöffnung. Vorzugsweise sind die Greiferarme symmetrisch zur Greiferöffnungsachse GA angeordnet.

Die Greifer 5.1 der Transfereinrichtung 5 sind synchron zueinander antreibbar, wobei die Greiferöffnungsachsen GA der Greifer 5.1 jeweils dieselbe Orientierung aufweisen, vorzugsweise parallel zueinander verlaufen. Hierzu weist die Transfereinrichtung 5 zumindest eine gemeinsame Antriebseinrichtung 5.2 auf, über welche die Greifer 5.1 der Transfereinrichtung 5 miteinander antriebsmäßig verbunden sind, so dass ein gemeinsames Drehen bzw. Schwenken der Greifer 5.1 um die jeweilige Drehachse DA synchron zueinander erfolgt. Die Anzahl der Greifer 5.1 der Transfereinrichtung 5 ist abhängig von der Anzahl der Behälter B, welche gruppenweise als Behältergruppe BG aufzunehmen sind und anschließend linear und getaktet von der Behälterbehandlungsmaschine 20 weiterbehandelt werden sollen. Im vorliegenden Ausführungsbeispiel umfasst eine Behältergruppe BG beispielsweise zehn in einer Reihe angeordneten Behälter B, so dass die Transfereinrichtung 5 beispielhaft mit zehn Greifern 5.1 ausgestattet ist. Es versteht sich jedoch, dass eine beliebige Anzahl an Greifern 5.1 vorgesehen werden kann, ohne dass hierdurch der Erfindungsgedanke verlassen wird.

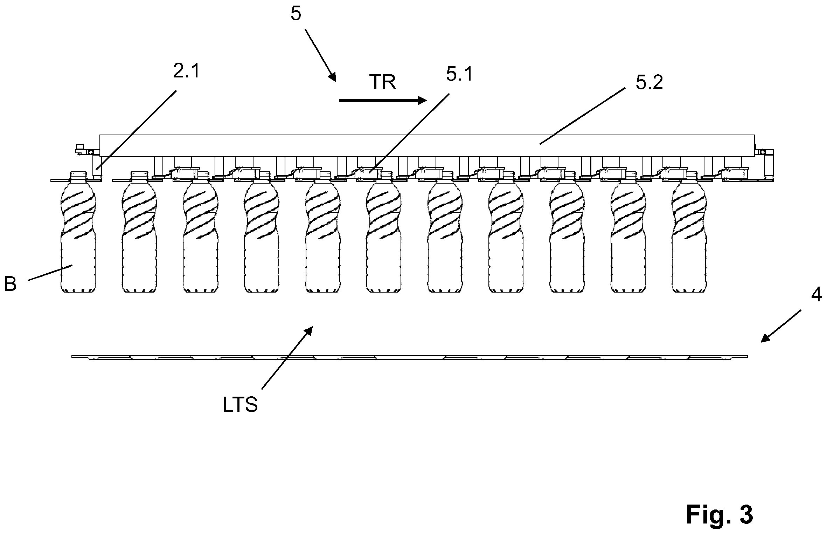

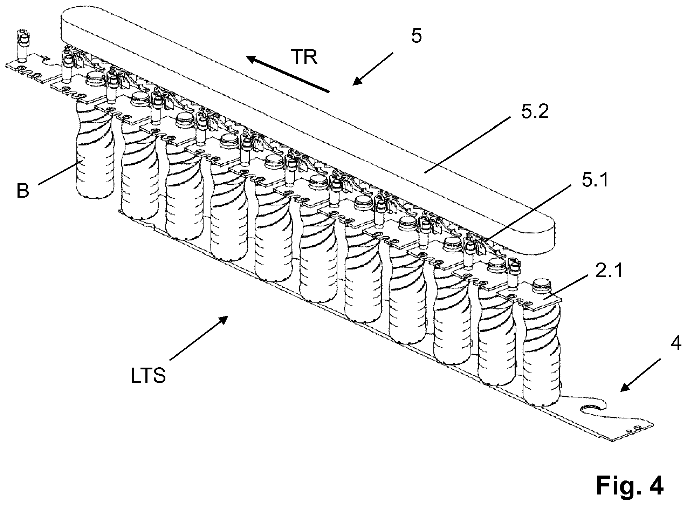

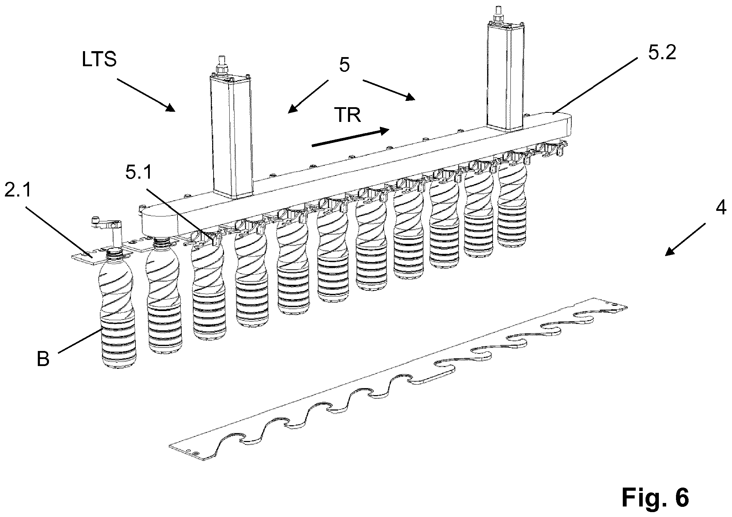

Figur 3 zeigt beispielsweise in einer Ausschnittsdarstellung eine schematische Seitenansicht der linearen Transportstreckenabschnitt LTS mit zugeordneter erfindungsgemäßer Transfereinrichtung 5 und der darunter angeordneten getakteten Aufnahmevorrichtung 4. In den Figuren 4 und 6 sind zwei unterschiedliche perspektivische Ansichten dieses Abschnittes der Vorrichtung 1 ebenfalls beispielhaft dargestellt.

Die von der erfindungsgemäßen Transfereinrichtung 5 aufgenommenen Behälter B werden anschließend gruppenweise und somit als Behältergruppe BG an die in Behandlungsrichtung nachfolgende getaktete Aufnahmevorrichtung 4 übergeben. Die Aufnahmevorrichtung 4 ist vorzugsweise ein Teil der Behandlungsmaschine 20.

Die Aufnahmevorrichtung 4 wird im vorliegenden Ausführungsbeispiel nur in äußerst vereinfachter Form dargestellt, und zwar ist symbolisch hierfür lediglich eine Tragplatte dargestellt, welche eine an die aufzunehmende Anzahl an Behälter B einer Behältergruppe BG angepasste Anzahl an Ausnehmungen aufweist. Die Ausnehmungen der Tragplatte sind wiederum zur hängenden Halterung der Behälter B im Bereich des Behälterhalses bzw. Neckringes bei PET-Flaschen eingerichtet.

Die von der Tragplatte aufgenommenen und gehaltenen Behälter B werden als Behältergruppe BG in der Behälterbehandlungsmaschine 20 dann weiter behandelt, insbesondere bei deren Ausbildung in Form einer Füllmaschine befüllt. Die Aufnahme der Behältergruppe BG mittels einer derartigen Tragplatte ist an sich bekannt und daher nicht weiter in den Figuren dargestellt.

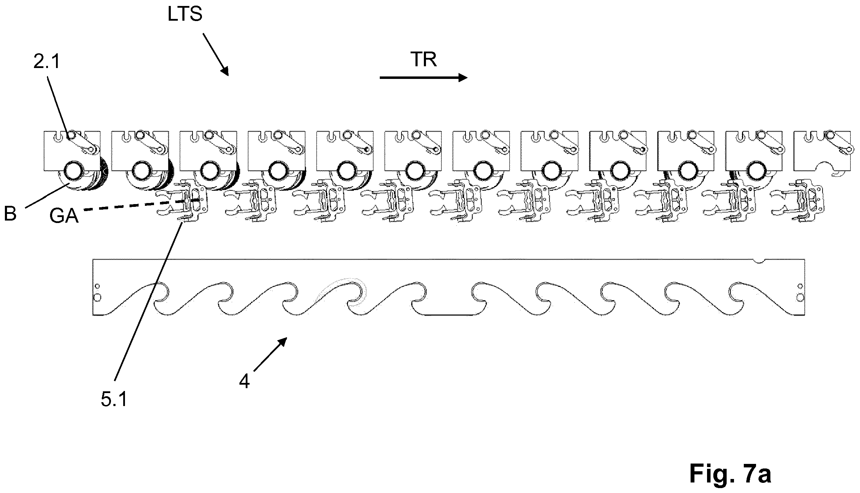

In den Figuren 7a-f wird die gruppenweise Aufnahme der Behälter B von der Einlaufeinrichtung 2 bzw. dessen Greifern 2.1 mittels der erfindungsgemäßen Transfereinrichtung 5 bzw. deren Greifer 5.1 beispielhaft anhand von schematischen Draufsichten auf die freigestellten Trag- und Halteelemente 2.1 bzw. Greifer 5.1 zu unterschiedlichen Zeitpunkten entlang des linearen Transportstreckenabschnittes LTS erläutert.

Die wirksamen Greifabschnitte der Trag- und Halteelemente 2.1 der Einlaufeinrichtung 2 und die Greifarme der Greifer 5.1 der Transfereinrichtung 5 sind zur störungsfreien Aufnahme bzw. Übergabe der Behälter B von der Einlaufeinrichtung 2 bzw. an die Transfereinrichtung 5 in unterschiedlichen Ebenen angeordnet.

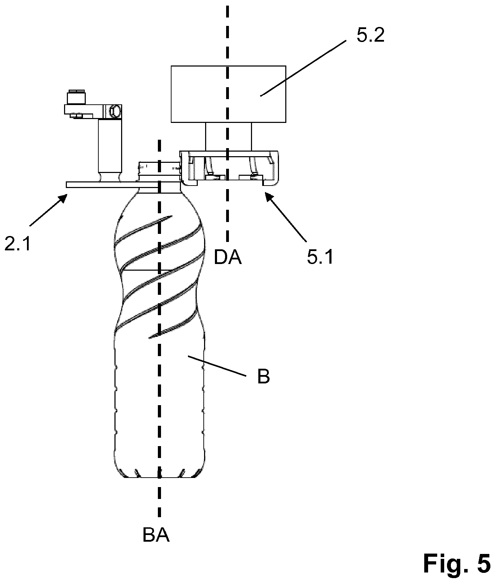

Figur 5 zeigt beispielsweise eine schematische Seitenansicht eines von den Greifabschnitten der Trag- und Halteelemente 2.1 gehaltenen Behälters B und dem zugeordnete, gegenüberliegende Greifarme eines Greifers 5.1 der Transfereinrichtung 5. Hierbei kommen beispielhaft die Greifarme des Greifers 5.1 in ein horizontalen Ebene zu liegen, welche oberhalb der die Greifabschnitte des Greifers 2.1 aufnehmenden horizontalen Ebene sich befindet. Damit ist ein störungsfreies Einschwenken der Greifarme der Greifer 5.1 in den kontinuierlichen Behälterstrom möglich.

Figur 7a zeigt die kontinuierlich in Transportrichtung TR bewegten Behälter B, welche sich aktuell im linearen Transportstreckenabschnitt LTS befinden. Die Trag- und Halteelemente 2.1 der Einlaufeinrichtung 2 halten hierbei jeweils einen Behälter B, und zwar ist hierzu beispielsweise der Behälterhals in jeweils einer nach außen, d.h. in Richtung der Transfereinrichtung 5 geöffneten Greiferausnehmung aufgenommen. Die Behälter B können damit in Richtung der Transfereinrichtung 5 durch Öffnen der Trag- und Halteelemente 2.1 der Einlaufrichtung 2 freigegeben werden. Die Greiferöffnungsachsen GA der Greifer 5.1 sind schräg zur Transportrichtung TR orientiert, wobei aufgrund der Rotation der Greifer 5.1 um die jeweilige Drehachse DA im Uhrzeigersinn ein Einschwenken dessen bewirkt wird.

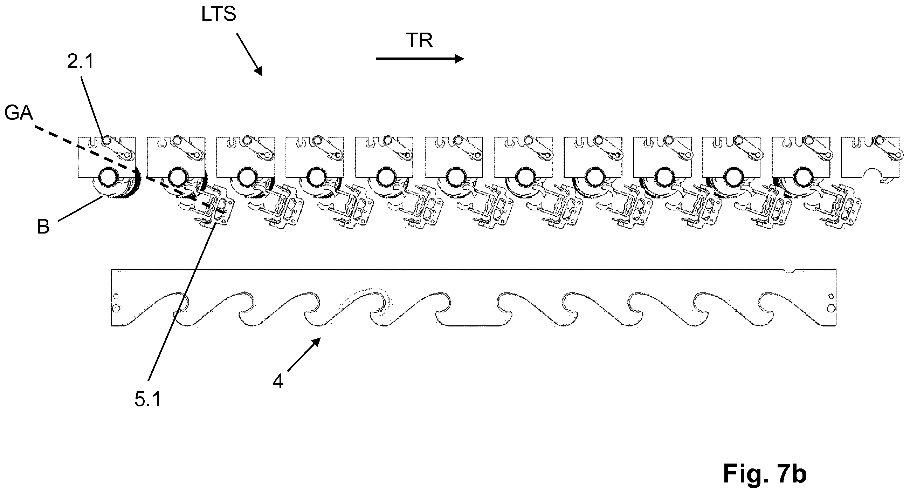

Bei der in Figur 7b dargestellten Momentaufnahme des Einschwenkvorganges der Greifer 5.1 ist eine deutliche Schrägstellung der Greiferöffnungsachsen GA zum linearen Transportstreckenabschnitt LTS und damit zu einer gedachten, die Behälterlängsachsen BA aufnehmenden Ebene erkennbar. Die Greiferöffnungen sind bereits in Richtung des aufzunehmenden und sich in Bewegung befindlichen Behälterhalses bzw. Neckringes orientiert, und zwar ist diese entgegen der Transportrichtung TR geöffnet.

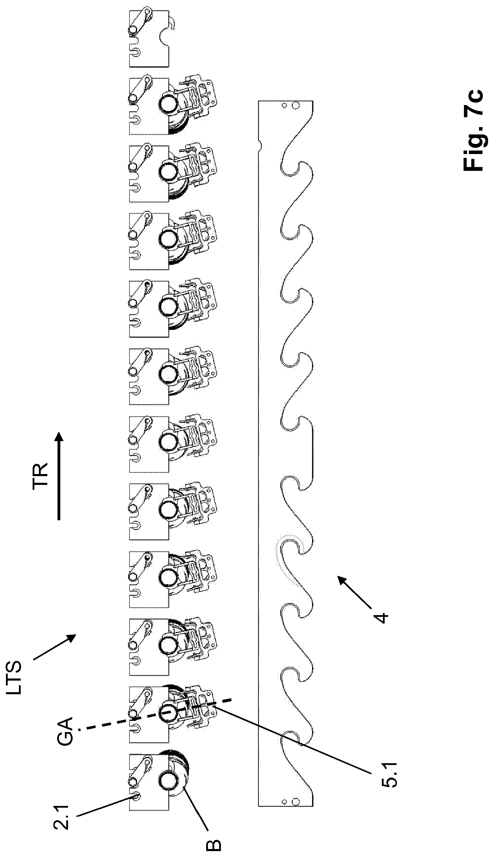

Figur 7c zeigt den linearen Transportstreckenabschnitt LTS zu einem nachfolgenden späteren Transportzeitpunkt, bei dem die Greiferöffnungsachsen GA senkrecht zur Behälterlängsachse BA des aufzunehmenden Behälters B verlaufen, d.h. der aufzunehmende Behälterhals bzw. Neckring befindet sich unmittelbar vor der Greiferöffnung des zugeordneten Greifers 5.1 der Transfereinrichtung 5.

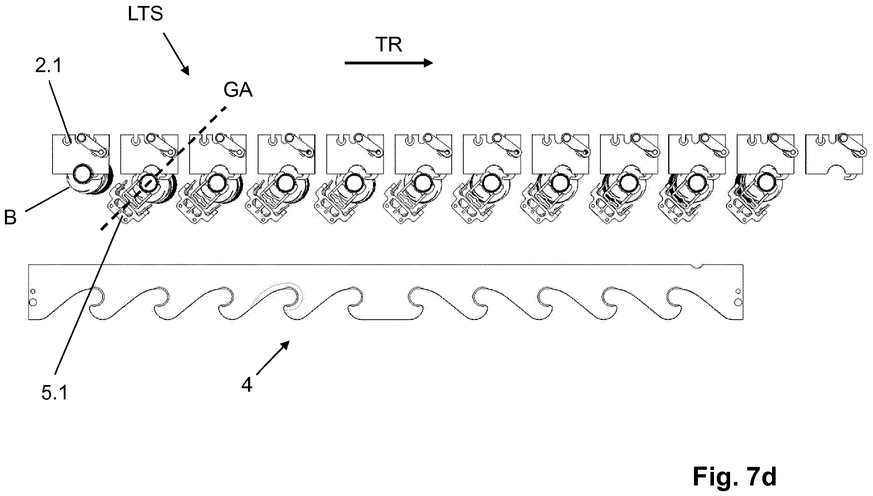

Figur 7d zeigt den linearen Transportstreckenabschnitt LTS nach der Aufnahme der Behälter B von den Greifern 5.1 bzw. der Freigabe durch die Trag- und Halteelemente 2.1 der Einlaufeinrichtung 2. Die Greiferöffnungsachse GA verläuft wiederum schräg zu einer gedachten, die Behälterlängsachsen BA aufnehmenden Ebene, wobei die Greiferöffnung in Transportrichtung TR geöffnet ist.

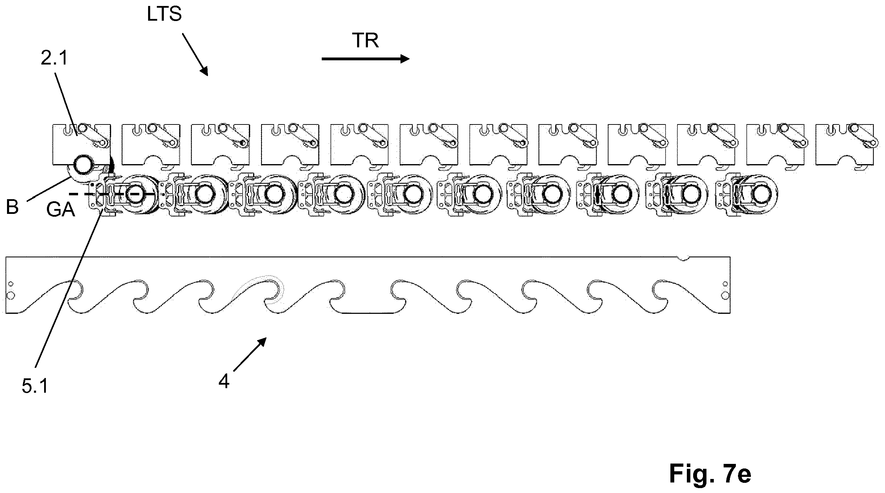

In Figur 7e sind die Behälter B der Behältergruppe BG hängend aufnehmenden Greifer 5.1 der Transfereinrichtung 5 entlang einer Reihe orientiert, d.h. die Greiferöffnungsachsen GA der Greifer 5.1 fluchten zueinander und kommen in der die Behälterlängsachsen BA aufnehmenden Ebene zu liegen.

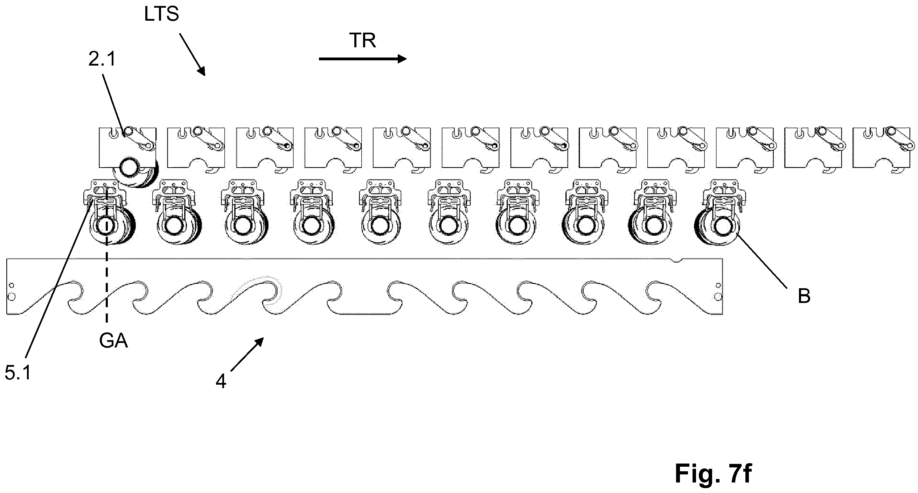

Schließlich zeigt Figur 7f die Greifer 5.1 der Transfereinrichtung 5 mit senkrecht zur Transportrichtung TR orientierten Greiferöffnungsachsen GA, d.h. die Greiferöffnungen weisen in Richtung der getakteten Aufnahmevorrichtung 4, an welche die Behältergruppe BG nachfolgend übergeben wird.

Während der Übergabe der Behältergruppe BG von der Transfereinrichtung 5 an die getaktete Aufnahmevorrichtung 4 läuft der Transport der Behälter B über die Einlaufeinrichtung 2 kontinuierlich weiter, so dass die in dem linearen Transportstreckenabschnitt LTS transportierten Behälter B erneut analog zu den Figuren 7a - f aufgenommen und übergeben werden können.

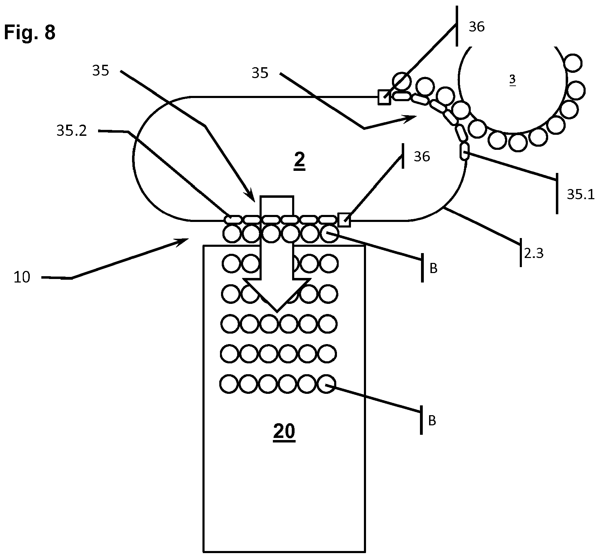

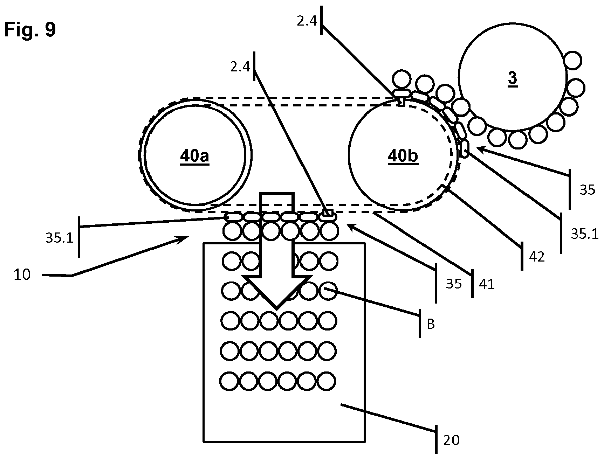

Bei den in der Figur 8 und 9 dargestellten Ausführungsformen ist mehr als nur ein bewegtes und gesteuertes Transportelement 2.2 vorgesehen, so dass die jeweiligen Trag- und Halteelemente 2.1 eines Transportelementes 2.2 und die daran gehaltenen Behälter B nun einzeln oder als Gruppe in Abhängigkeit von dem jeweiligen Transportelement 2.2 transportiert werden bzw. in ihrer Bewegung steuerbar sind.

In der weiteren Ausführungsvariante nach Figur 8 der Vorrichtung 1, ist das Transportelement 2.2 der Einlaufeinrichtung 2 auf durch zumindest einer Transportschiene 2.3 geführten mit mehreren Schlittenelementen 35.1, die jeweils gruppenweise ein Zugmodul 35 bilden. Jedes Schlittenelement 35.1 trägt dabei jeweils ein Trag- und Haltelemente 2.1. Die Anzahl der von den Schlittenelementen 35.1 sowie der aufgenommenen Trag- und Halteelemente 2.1 entspricht der Anzahl der Behälter B einer Behältergruppe BG, d.h. die Schlittenelemente 35.1 eines Zugmoduls 35 sind zur Aufnahme zumindest der Behälter B einer Behältergruppe BG ausgebildet. Das Zugmodul 35 weist in einer bevorzugten Ausführungsvariante eine Antriebseinheit 36 auf, vorzugsweise in Form einer Servomotoreinheit, über welche das Zugmodul 35 gesteuert entlang der zumindest einen Transportschiene 2.3 bewegt werden kann, und zwar auch mehrere Zugmodule 35 neben- bzw. hintereinander. Beispielsweise kann jedes Zugmodul 35 unabhängig vom anderen Zugmodul 35 auf eine vorgegebene Geschwindigkeit beschleunigt oder abgebremst werden. Alternativ können diese auch an einer vorgegebenen Stelle angehalten und anschließend wieder angefahren werden, insbesondere im Übergangsbereich 10.

Bevorzugt finden zwei oder mehrere Zugmodule 35 Verwendung, deren Anzahl an Halte- und Tragelemente 2.1 jeweils an die Anzahl der Behälter B einer Behältergruppe BG angepasst sind. Jedem Zugmodul 35 ist auch hier mindestens eine Antriebseinheit 36, vorzugsweise in Form einer Servomotoreinheit zugeordnet, über welche das gesamte Zugmodul 35 gesteuert entlang der Transportschiene 2.3 bewegt werden kann. Die Zugmodule 35 sind zum näherungsweise gleichzeitigen Transport mehrerer Behältergruppen BG über die Einlaufeinrichtung 2 vorgesehen.

Für die Ausführungsform gemäß der Figur 8 kann insbesondere auf der tragenden Transportschiene 2.3 eine nicht dargestellte Zahnschiene vorgesehen werden, in welches kraftübertragend ein entsprechendes Zahnrad der umlaufenden Antriebseinheit 36 eingreift. In einer weiterhin nicht dargestellten Ausführungsform ist die Antriebseinheit 36 auch ein Schlittenelement, welches ein Trag- und Halteelement 2.1 aufweist.

In einer nicht dargestellten Ausführungsvariante analog zur Figur 8, ist die Einlaufeinrichtung 2 als elektro-magnetischer Direktantrieb ausgebildet, bei der die Transportschiene 2.3 als elektro-magnetische Antriebseinheit oder Motor (Stator) fungiert und mindestens ein Schlittenelement 35.1 oder die Antriebseinheit 36 koppelbare Permanentmagnete oder ferromagnetische Komponenten umfasst (Rotor oder Läufer) und hierüber einzeln und unabhängig antreibbar sind. Im Idealfall ist jedes Schlittenelement 35.1 als Antriebelement 36 ausgebildet, wobei die Schlittenelemente 35.1 untereinander nicht direkt mechanisch gekoppelt sind. Hierbei ist jedes dieser direkt angetriebenen Schlittenelemente 35.1 unabhängig steuer- und verfahrbar.

Bei der Ausführungsvariante gemäß der Figur 9 sind die beiden Zugmodule 35 über jeweils einen Riemen 41, 42 mit je einem rotierenden Servoantrieb 40a, 40b verbunden und ansteuerbar. In dem vorliegenden Beispiel ist das im Übergabebereich 10 befindliche Zugmodul 35 mit dem äußeren Riemen 41 über mindestens ein entsprechendes Kopplungselement 2.4 mechanisch fest verbunden und das im Übergangsbereich zur Zuleitvorrichtung 3 befindliche Zugmodul 35 ist über mindestens ein Kopplungselement 2.4 mit dem inneren Riemen 42 verbunden. Die Riemen 41, 42 sind jeweils mittels einer zugeordneten Servomotoreinheit 40a, 40b individuell beschleunigbar und abbremsbar, d.h. die beiden Zugmodule 35 können unabhängig voneinander auf der Transportschiene 2.3 der Einlaufeinrichtung 2 betrieben werden. Die jeweils benachbarte Seite dient idealerweise nur als passive Führung und Umlenkung des jeweiligen Riemens. Alternativ können die Riemen 41, 42 auch in analoger Weise auf unterschiedlichen Höhenlagen geführt und angetrieben werden, wobei die Kopplungselemente dann entsprechend ausgestaltet sind, dass ein ungehinderter Antrieb beider Riemen erfolgen kann.

Natürlich können in analoger Weise auch mehr als zwei Zugmodule 35 und entsprechende Antriebe und Riemen vorgesehen werden. Durch entsprechende mechanische Kopplung mehrerer Servomotoreinheiten 40a, 40b mit den zugehörigen Zugmodulen 35 können insbesondere bis zu acht derartiger Zugmodule 35 in einer Einlaufeinrichtung 2 unabhängig voneinander betrieben werden.

Weiterhin kann es bei dem in Figur 9 gezeigten Ausführungsbeispiel sinnvoll sein, dass die Riemen 41, 42 durch eine geeignete Führungs- und Auflageschiene geführt und/oder gestützt werden. Dabei sollen unter Riemen auch jegliche schlaufenartige Gebilde verstanden werden, auch Gliederketten aus Metall oder Kunststoff, die für den beschriebenen Einsatz geeignet sind.

Vorteilhaft kann mittels der beschriebenen Zugmodule 35 bzw. deren Schlittenelemente eine kontinuierliche Übernahme der Behälter B von der Zuleitvorrichtung 3 erfolgen. Die von dem jeweiligen Zugmodul 35 bzw. Schlittenelement aufgenommenen Behälter B einer Behältergruppe BG werden mittels der zugehörigen Antriebseinheit bzw. Servomotoreinheit gesteuert an den Übergabebereich 10 gefördert und dort getaktet von der Aufnahmevorrichtung 4 ent- bzw. übernommen. Anschließend wird das "entleerte" Zugmodul bzw. Schlittenelement an die Zuleitvorrichtung 3 zurückgefördert, um von dort erneut Behälter B aufzunehmen.

Ganz allgemein gilt für diese Vorrichtung und das Verfahren mit allen seinen Ausführungsformen, dass idealerweise die Behälter von der Zuleitvorrichtung bis zur Übergabe und Aufnahme an der Aufnahmevorrichtung der getakteten Behandlungsmaschine hängend gehalten werden, wozu sie im Bereich des Behälterhalses oder eines Neckrings (oberhalb oder unterhalb) mit einer Klammer oder einem Greifer erfasst, gehalten und/oder getragen werden können.

Die Erfindung wurde voranstehend an Ausführungsbeispielen beschrieben. Es versteht sich, dass zahlreiche Änderungen sowie Abwandlungen möglich sind, sofern sie den Schutzbereich der nachstehenden Ansprüche nicht verlassen.

### Bezugszeichenliste

- 1: Vorrichtung
- 2: Einlaufeinrichtung
- 2.1: Trag- und Halteelemente
- 2.2: Transportelement, Transportkette
- 2.3: Transportschiene
- 2.4: Kopplungselement
- 3: Zuleitvorrichtung
- 3.1: Greifer
- 4: Aufnahmevorrichtung (linear, getaktet)
- 5: Transfereinrichtung
- 5.1: Greifer
- 5.2: Antriebseinrichtung

- 10: Übergangsbereich
- 20: Behandlungsmaschine (getaktet)

- 35: Zugmodul
- 35.1: Schlittenelement
- 36: Antriebseinheit

- 40a, 40b: Servoantrieb
- 41, 42: Riemen

- B: Behälter
- BA: Behälterlängsachse
- BG: Behältergruppe
- DA: Drehachse
- GA: Greiferöffnungsachse
- RR: Rotationsrichtung
- TR: Transportrichtung
- TS: Transportstrecke
- LTS, LTS*: Transportstreckenabschnitte
- US, US*: Umlenkabschnitte

## Patentansprüche

1. Vorrichtung (1) zum gruppenweise Aufnehmen und Zuführen einer Behältergruppe (BG) an eine getaktete Behandlungsmaschine (20) mit zumindest einer getakteten Aufnahmevorrichtung (4) zur Aufnahme der Behältergruppe (BG), wobei die Vorrichtung (1) eine Einlaufvorrichtung (2) und eine Zuleitvorrichtung (3) umfasst, bei der die Einlaufvorrichtung (2) eine geschlossene Transportstrecke (TS) mit zumindest einem linearen Transportstreckenabschnitt (LTS, LTS*) bildet, wobei die Einlaufvorrichtung (2) ein Transportelement (2.2) zum Transport der Behälter (B) entlang der Transportstrecke (TS) umfassend eine Vielzahl von Trag- und Halteelementen (2.1) aufweist, über die die Behälter (B) in Form eines kontinuierlichen Behälterstromes entlang der Transportstrecke (TS) transportierbar sind, bei der die Zuleitvorrichtung (3) zum hängenden Transport der Behälter (B) ausgebildet ist und nicht als Lufttransporteur ausgebildet ist, mittels der die hängend transportierten Behälter (B) einzeln an den Trag- und Halteelementen (2.1) der Einlaufvorrichtung (2) übergebbar sind, wobei die Vorrichtung (1) in einem Übergangsbereich (10) zwischen der Einlaufvorrichtung (2) und der Aufnahmevorrichtung (4) eine Transfereinrichtung (5) umfasst, die eine Vielzahl von Greifern (5.1) zum gleichzeitigen Aufnehmen der Behälter (B) einer Behältergruppe (BG) aus dem kontinuierlichen Behälterstrom im Bereich des zumindest einen linearen Transportstreckenabschnittes (LTS) der Einlaufvorrichtung (2) aufweist und die zum Zuführen der aufgenommenen Behältergruppe (BG) an die getaktete Aufnahmevorrichtung (4) vorgesehen ist, wobei die Greifer (5.1) der Transfereinrichtung (5) zur Aufnahme der entlang des linearen Transportstreckenabschnittes (LTS) bewegten Behälter (B) der Behältergruppe (BG) um eine vertikale Drehachse (DA) rotier- oder schwenkbar ausgebildet sind, wobei die Rotation oder das Verschwenken der Greifer (5.1) der Transfereinrichtung (5) an die lineare Transportbewegung der Behälter (B) im linearen Transportstreckenabschnitt (LTS) angepasst ist.

2. Vorrichtung (1) nach Anspruch 1, **dadurch gekennzeichnet, dass** die Greifer (5.1) der Transfereinrichtung (5) zum Greifen der Behälter (B) am oder oberhalb eines Behälterhalses oder bei durch PET- Flaschen gebildete Behälter am oder oberhalb eines Neckringes einer PET-Flasche ausgebildet sind.

3. Vorrichtung (1) nach Anspruch 1 oder 2, **dadurch gekennzeichnet, dass** die Greifer (5.1) der Transfereinrichtung (5) synchron zueinander rotier- oder schwenkbar sind.

4. Vorrichtung (1) nach einem der Ansprüche 1 bis 3, **dadurch gekennzeichnet, dass** die Greifer (5.1) der Transfereinrichtung (5) parallel und beabstandet zum linearen Transportstreckenabschnitt (LTS) angeordnet sind, wobei jeweils ein Greifer (5.1) der Transfereinrichtung (5) zur Aufnahme eines Behälters (B) von einem Greifer (2.1) der Einlaufvorrichtung (2) vorgesehen ist.

5. Vorrichtung (1) nach einem der vorhergehenden Ansprüche, **dadurch gekennzeichnet, dass** die Transfereinrichtung (5) zumindest eine gemeinsame Antriebseinrichtung (5.2) aufweist, über welche die Greifer (5.1) der Transfereinrichtung (5) zur Erzeugung einer synchronen Dreh- oder Schwenkbewegung der Greifer (5.1) um die jeweilige Drehachse (DA) antriebsmäßig verbunden sind.

6. Vorrichtung (1) nach einem der vorhergehenden Ansprüche, **dadurch gekennzeichnet, dass** die Greifer (5.1) der Transfereinrichtung (5) zwei, einander gegenüberliegende Greiferarme aufweisen, deren freien Endbereiche eine Greiferöffnung zum Einführen und Halten des Behälterhalses zwischen den beiden Greiferarme einschließen.

7. Vorrichtung (1) nach Anspruch 6, **dadurch gekennzeichnet, dass** die Greifer (5.1) der Transfereinrichtung (5) eine Greiferöffnungsachse (GA) aufweisen, die sich von der Drehachse (DA) senkrecht und radial nach außen zwischen den beiden Greiferarmen über die Greiferöffnung erstreckt.

8. Vorrichtung (1) nach einem der vorhergehenden Ansprüche, **dadurch gekennzeichnet, dass** die Trag- und Halteelemente (2.1) der Einlaufeinrichtung (2) von mindestens einem endlos umlaufenden Transportelement (2.2) gehalten werden und die Trag- und Halteelemente (2.1) insbesondere seitlich von der Transportstrecke (TS) nach außen weisen und/oder abstehen.

9. Vorrichtung (1) nach Anspruch 8, **dadurch gekennzeichnet, dass** das Transportelement (2.2) durch eine Transportkette oder eine Transportschiene (2.3) mit zugehörigen Schlittenelementen (35.1) und/oder Zugmodulen (35) gebildet ist, wobei die Trag- und Halteelemente (2.1) an den Kettengliedern bzw. den Schlittenelementen (35.1) befestigt sind.

10. Vorrichtung (1) nach Anspruch 9, **dadurch gekennzeichnet, dass** mehrere über die Transportschiene (2.3) geführte Zugmodule (35) vorgesehen sind, wobei einem Zugmodul (35) jeweils mindestens
- eine steuerbare, verfahrbare Antriebseinheit (36) zugeordnet ist, welche eine Servomotoreinheit ist.

11. Vorrichtung (1) nach Anspruch 9, **dadurch gekennzeichnet, dass** mindestens zwei über die Transportschiene (2.3) geführte Zugmodule (35) vorgesehen sind, wobei den Zugmodulen (35) eine elektro-magnetische Antriebseinheit zugeordnet ist, bei welcher die Transportschiene (2.3) den steuer- und regelbaren elektromagnetischen Antrieb (Stator) darstellt oder umfasst und mindestens ein Schlittenelement (35.1) eines jeden Zugmoduls (35) Permanentmagnete oder ferromagnetische Komponenten umfasst (Läufer) und hierüber einzeln und unabhängig elektro-magnetisch antreibbar ist.

12. Vorrichtung (1) nach einem der Ansprüche 9 bis 11, **dadurch gekennzeichnet, dass** ein Zugmodul (35) eine der Anzahl der Behälter (B) einer Behältergruppe (BG) entsprechende Anzahl an Trag- und Halteelementen (2.1) aufweist.

13. Verfahren zum gruppenweisen Aufnehmen und Zuführen einer Behältergruppe (BG) an eine getaktete Behandlungsmaschine (20) mit zumindest einer getakteten Aufnahmevorrichtung (4) zur Aufnahme der Behältergruppe (BG) umfassend eine Einlaufvorrichtung (2) und eine Zuleitvorrichtung (3), bei dem ein kontinuierlicher Behälterstrom über die Zuleitvorrichtung (3) der Einlaufvorrichtung (2) zugeführt wird, die eine endlos umlaufende Transportstrecke (TS) mit zumindest einem linearen Transportstreckenabschnitt (LTS, LTS*) ausbildet, wobei die Behälter (B) entlang der Transportstrecke (TS) mittels einer Vielzahl von Trag- und Halteelementen (2.1) hängend transportiert werden, bei dem mittels einer eine Vielzahl von rotier- oder schwenkbaren Greifern (5.1) aufweisenden Transfereinrichtung (5) die Behälter (B) in Form einer Behältergruppe (BG) gleichzeitig aus dem kontinuierlich bewegten Behälterstrom im Bereich des zumindest einen linearen Transportstreckenabschnittes (LTS) der Einlaufrichtung (2) in einem Übergangsbereich (10) zwischen der Einlaufvorrichtung (2) und der Aufnahmevorrichtung (4) gruppenweise aufgenommen und die aufgenommenen Behälter (B) der getakteten Aufnahmevorrichtung (4) gruppenweise zugeführt werden, wobei zur gruppenweisen Aufnahme der Behälter (B) die Rotations- oder Schwenkbewegung der Greifer (5.1) der Transfereinrichtung (5) an die lineare Transportbewegung der Behälter (B) entlang des linearen Transportstreckenabschnittes (LTS) angepasst ist.

14. Verfahren nach Anspruch 13, **dadurch gekennzeichnet, dass** die Greifer (5.1) der Transfereinrichtung (5) synchron zueinander rotieren oder schwenken.

15. Verfahren nach Anspruch 13 oder 14, **dadurch gekennzeichnet, dass** die Trag- und Halteelemente (2.1) beim Transfer von der Einlaufvorrichtung (2) zur getakteten Aufnahmevorrichtung (4) fortlaufend entlang der Transportstrecke (TS) bewegt werden.

## Claims

1. Device (1) for taking up and delivering, group by group, of a container group (BG) to a cyclic treatment machine (20), with at least one cyclic take-up device (4) for taking up the container group (BG), wherein the device (1) comprises an intake device (2) and a delivery device (3), wherein the intake device (2) forms a closed transport segment (TS) with at least one linear transport segment section (LTS, LTS*), wherein the intake device (2) comprises a transport element (2.2) for the transport of containers (B) along the transport segment (TS), comprising a plurality of carrying and holding elements (2.1), by means of which the containers (B) can be transported in the form of a continuous container flow along the transport segment (TS), wherein the delivery device (3) is configured for the suspended transport of the containers (B) and is not configured as an overhead conveyor, by means of which the containers (B) being transported in a suspended manner can be transferred individually to the carrying and holding elements (2.1) of the intake device (2), wherein the device (1) comprises, in a transfer region (10) between the intake device (2) and the take-up device (4), a transfer device (5), which comprises a plurality of grippers (5.1) for the simultaneous take-up of the containers (B) of a container group (BG) out of the continuous container flow, in the region of the at least one linear transport segment section (LTS) of the intake device (2), and is provided for conveying the container group (BG) which has been taken up to the cyclic take-up device (4), wherein the grippers (5.1) of the transfer device (5) are configured as capable of rotation or pivoting about a vertical rotation axis (DA) for the purpose of taking up the containers (B) of the container group (BG) being moved along the linear transport segment section (LTS), wherein the rotation or pivoting of the grippers (5.1) of the transfer device (5) is adjusted to the linear transport movement of the containers (B) in the linear transport segment section (LTS).

2. Device (1) according to claim 1, **characterised in that** the grippers (5.1) of the transfer device (5) are configured for gripping the containers (B) at or above the container neck or, in the case of containers formed by PET bottles, on or above a neck ring of a PET bottle.

3. Device (1) according to claim 1 or 2, **characterised in that** the grippers (5.1) of the transfer device (5) can be rotated or pivoted towards one another in synchrony.

4. Device (1) according to any one of claims 1 to 3, **characterised in that** the grippers (5.1) of the transfer device (5) are arranged parallel to and at a distance from the linear transport segment section (LTS), wherein in each case a gripper (5.1) of the transfer device (5) is provided for taking up a container (B) from a gripper (2.1) of the intake device (2).

5. Device (1) according to any one of the preceding claims, **characterised in that** the transfer device (5) comprises at least one common drive device (5.2), by means of which the grippers (5.1) of the transfer device (5) are connected to one another by their drive means in order to produce a synchronous rotational or pivoting movement of the grippers (5.1) about the respective axis of rotation (DA).

6. Device (1) according to any one of the preceding claims, **characterised in that** the grippers (5.1) of the transfer device (5) comprise two opposing gripper arms, of which the free end regions enclose a gripper opening for introducing and holding the container neck between the two gripper arms.

7. Device (1) according to claim 6, **characterised in that** the grippers (5.1) of the transfer device (5) comprise a gripper opening axis (GA), which extends from the rotation axis (DA) perpendicular and radially outwards between the two gripper arms over the gripper opening.

8. Device (1) according to any one of the preceding claims, **characterised in that** the carrying and holding elements (2.1) of the intake device (2) are held by at least one endlessly circulating transport element (2.2), and, in particular, the carrying and holding elements (2.1) point or project laterally outwards from the transport segment (TS).

9. Device (1) according to claim 8, **characterised in that** the transport element (2.2) is formed by a transport chain or a transport rail (2.3) with associated carriage elements (35.1) and/or traction modules (35), wherein the carrying and holding elements (2.1) are secured to the chain links or the carriage elements (35.1) respectively.

10. Device (1) according to claim 9, **characterised in that** several traction modules (35) are provided, guided over the transport rail (2.3), wherein assigned to a traction module (35) in each case is at least one controllable and movable drive unit (36), which is a servomotor unit.

11. Device (1) according to claim 9, **characterised in that** at least two traction modules (35) are provided, guided over the transport rail (2.3), wherein an electromagnetic drive unit is assigned to the traction modules (35), wherein the transport rail (2.3) represents or comprises the controllable and regulatable electromagnetic drive (stator), and at least one carriage element (35.1) of each traction module (35) comprises permanent magnets or ferromagnetic components (rotor), and can be driven by these electromagnetically individually and independently.

12. Device (1) according to any one of claims 9 to 11, **characterised in that** a traction module (35) comprises a number of carrying and holding elements (2.1) corresponding to the number of the containers (B) of a container group (BG).

13. Method for the take-up and delivery, group by group, of a container group (BG) to a cyclic treatment machine (20) with at least one cyclic take-up device (4) for taking up the container group (BG), comprising an intake device (2) and a delivery device (3), wherein a continuous container flow is delivered by way of the delivery device (3) to the intake device (2), which forms an endlessly circulating transport segment (TS) with at least one linear transport segment section (LTS, LTS*), wherein the containers (B) are transported suspended along the transport segment (TS) by means of a plurality of carrying and holding elements (2.1), wherein, by means of a transfer device (5), comprising a plurality of rotating or pivoting grippers (5.1), the containers (B), in the form of a container group (BG) are taken up simultaneously, group by group, out of the continuously moving container flow in the region of the at least one linear transport segment section (LTS) of the intake device (2), in a transfer region (10) between the intake device (2) and the take-up device (4), and the containers (B) taken up are delivered in groups to the cyclic take-up device (4), wherein, for the take-up group by group of the containers (B), the rotation or pivot movement of the grippers (5.1) of the transfer device (5) is adjusted to the linear transport movement of the containers (B) along the linear transport segment section (LTS).

14. Method according to claim 13, **characterised in that** the grippers (5.1) of the transfer device (5) rotate or pivot towards one another in synchrony.

15. Method according to claim 13 or 14, **characterised in that**, at the transfer from the intake device (2) to the cyclic take-up device (4), the carrying and holding elements (2.1) continue to move along the transport segment (TS).

## Revendications

1. Dispositif (1) destiné à recevoir et à amener par groupe un groupe de contenants (BG) à une machine de traitement cadencée (20) avec au moins un dispositif de réception cadencé (4) destiné à recevoir le groupe de contenant (BG), dans lequel le dispositif (1) comprend un dispositif d'admission (2) et un dispositif d'acheminement (3), où le dispositif d'admission (2) forme une voie de transport (TS) fermée avec au moins un tronçon de voie de transport linéaire (LTS, LTS*), dans lequel le dispositif d'admission (2) présente un élément de transport (2.2) destiné à transporter les contenants (B) le long de la voie de transport (TS) comprenant une multitude d'éléments de support et de maintien (2.1), par l'intermédiaire desquels les contenants (B) peuvent être transportés le long de la voie de transport (TS) sous la forme d'un flux de contenants continu, où le dispositif d'acheminement (3) est réalisé pour transporter de manière suspendue les contenants (B) et n'est pas réalisé en tant que transporteur aérien, au moyen duquel les contenants (B) transportés de manière suspendue peuvent être transmis individuellement aux éléments de support et de maintien (2.1) du dispositif d'admission (2), dans lequel le dispositif (1) comprend dans une zone de transition (10) entre le dispositif d'admission (2) et le dispositif de réception (4) un système de transfert (5), qui présente une pluralité de grappins (5.1) destinés à recevoir simultanément les contenants (B) d'un groupe de contenants (BG) provenant du flux de contenants continu dans la zone de l'au moins un tronçon de voie de transport linéaire (LTS) du dispositif d'admission (2) et qui est prévu pour amener le groupe de contenants (BG) reçu au dispositif de réception cadencé (4), dans lequel les grappins (5.1) du système de transfert (5) sont réalisés de manière à pouvoir tourner ou pivoter autour d'un axe de rotation vertical (DA) pour recevoir les contenants (B) du groupe de contenants (BG) déplacés le long du tronçon de voie de transport linéaire (LTS), dans lequel la rotation ou le pivotement des grappins (5.1) du système de transfert (5) est adaptée ou adapté au déplacement de transport linéaire des contenants (B) sur le tronçon de voie de transport linéaire (LTS).

2. Dispositif (1) selon la revendication 1, **caractérisé en ce que** les grappins (5.1) du système de transfert (5) sont réalisés pour saisir les contenants (B) sur ou au-dessus du col de contenant ou, pour les contenants formés par des bouteilles en PET, sur ou au-dessus d'une collerette d'une bouteille en PET.

3. Dispositif (1) selon la revendication 1 ou 2, **caractérisé en ce que** les grappins (5.1) du système de transfert (5) peuvent être tournés ou pivotés les uns par rapport aux autres de manière synchrone.

4. Dispositif (1) selon l'une quelconque des revendications 1 à 3, **caractérisé en ce que** les grappins (5.1) du système de transfert (5) sont disposés de manière parallèle et espacée par rapport au tronçon de voie de transport linéaire (LTS), dans lequel respectivement un grappin (5.1) du système de transfert (5) est prévu pour recevoir un contenant (B) d'un grappin (2.1) du dispositif d'admission (2).

5. Dispositif (1) selon l'une quelconque des revendications précédentes, **caractérisé en ce que** le système de transfert (5) présente au moins un système d'entraînement (5.2) commun, par l'intermédiaire duquel les grappins (5.1) du système de transfert (5) sont reliés en entraînement pour produire un déplacement par rotation ou par pivotement synchrone des grappins (5.1) autour de l'axe de rotation (DA) respectif.

6. Dispositif (1) selon l'une quelconque des revendications précédentes, **caractérisé en ce que** les grappins (5.1) du système de transfert (5) présentent deux bras de grappin se faisant face l'un l'autre, dont les zones d'extrémité libres forment entre les deux bras de grappin une ouverture de grappin destinée à introduire et à maintenir le col de contenant.

7. Dispositif (1) selon la revendication 6, **caractérisé en ce que** les grappins (5.1) du système de transfert (5) présentent un axe d'ouverture de grappin (GA), qui s'étend au-dessus de l'ouverture de grappin de manière perpendiculaire depuis l'axe de rotation (DA) et radialement vers l'extérieur entre les deux bras de grappin.

8. Dispositif (1) selon l'une quelconque des revendications précédentes, **caractérisé en ce que** les éléments de support et de maintien (2.1) du dispositif d'admission (2) sont maintenus par au moins un élément de transport (2.2) de circulation sans fin et les éléments de support et de maintien (2.1) pointent et/ou font saillie vers l'extérieur en particulier sur le côté de la voie de transport (TS).

9. Dispositif (1) selon la revendication 8, **caractérisé en ce que** l'élément de transport (2.2) est formé par une chaîne de transport ou un rail de transport (2.3) avec des éléments de chariot (35.1) et/ou des modules de traction (35) associés, dans lequel les éléments de support et de maintien (2.1) sont fixés sur les maillons de chaîne ou les éléments de chariot (35.1).

10. Dispositif (1) selon la revendication 9, **caractérisé en ce que** sont prévus plusieurs modules de traction (35) guidés par l'intermédiaire du rail de transport (2.3), dans lequel respectivement au moins
- une unité d'entraînement (36) mobile pouvant être commandée, laquelle est une unité formant servomoteur est associée
à un module de traction (35).

11. Dispositif (1) selon la revendication 9, **caractérisé en ce qu'**au moins deux modules de traction (35) guidés par l'intermédiaire du rail de transport (2.3) sont prévus, dans lequel est associée aux modules de traction (35) une unité d'entraînement électromagnétique, pour laquelle le rail de transport (2.3) constitue ou comprend l'entraînement (stator) électromagnétique pouvant être commandé et régulé et au moins un élément de chariot (35.1) d'un module de traction (35) respectif comprend des aimants permanents ou des composants ferromagnétiques (induit) et peut être entraîné par cet intermédiaire de manière électromagnétique individuellement et indépendamment.

12. Dispositif (1) selon l'une quelconque des revendications 9 à 11, **caractérisé en ce qu'**un module de traction (35) présente un nombre d'éléments de support et de maintien (2.1) correspondant au nombre des contenants (B) d'un groupe de contenants (BG).

13. Procédé pour recevoir et amener par groupe un groupe de contenants (BG) à une machine de traitement cadencée (20) avec au moins un dispositif de réception cadencé (4) destiné à recevoir le groupe de contenants (BG) comprenant un dispositif d'admission (2) et un dispositif d'acheminement (3), où un flux de contenants continu est amené par l'intermédiaire du dispositif d'acheminement (3) au dispositif d'admission (2), qui réalise une voie de transport (TS) circulant sans fin avec au moins un tronçon de voie de transport linéaire (LTS, LTS*), dans lequel les contenants (B) sont transportés de manière suspendue le long de la voie de transport (TS) au moyen d'une pluralité d'éléments de support et de maintien (2.1), où les contenants (B) sous la forme d'un groupe de contenants (BG) sont reçus par groupe simultanément en provenance du flux continu de contenants en mouvement dans la zone de l'au moins un tronçon de voie de transport linéaire (LTS) du dispositif d'admission (2) dans une zone de transition (10) entre le dispositif d'admission (2) et le dispositif de réception (4) et les contenants (B) reçus sont amenés par groupe au dispositif de réception cadencé (4) au moyen d'un système de transfert (5) présentant une pluralité de grappins (5.1) pouvant tourner ou pivoter, dans lequel le déplacement de rotation ou de pivotement des grappins (5.1) du système de transfert (5) est adapté au déplacement de transport linéaire des contenants (B) le long du tronçon de voie de transport linéaire (LTS) pour recevoir par groupe les contenants (B).

14. Procédé selon la revendication 13, **caractérisé en ce que** les grappins (5.1) du système de transfert (5) tournent ou pivotement les uns par rapport aux autres de manière synchrone.

15. Procédé selon la revendication 13 ou 14, **caractérisé en ce que** les éléments de support et de maintien (2.1) sont déplacés en continu le long de la voie de transport (TS) lors du transfert depuis le dispositif d'admission (2) vers le dispositif de réception cadencé (4).
